# EUROPEAN PATENT SPECIFICATION

(11) **EP 3 256 652 B1**
(45) Date of publication and mention of the grant of the patent: **17.07.2019**
(21) Application number: 15825807.9
(22) Date of filing: 08.12.2015
(51) Int. Cl.: E02F 5/10, E02F 5/12, H02G 1/06

(54) **APPARATUS FOR ENTRENCHING A FLEXIBLE ELONGATE MEMBER, SUCH AS A ROPE, CABLE OR PIPE**
VORRICHTUNG ZUM EINGRABEN VON LÄNGLICHEN FLEXIBLEN TEILEN WIE EIN SEIL, KABEL ODER ROHR
APPAREIL POUR L'ENFOUISSEMENTS D'ÉLÉMENTS ALLONGÉS FLEXIBLES TELS QU'UN CÂBLE, UNE CORDE OU UN TUYAU

(30) Priority: 12.02.2015 GB 201502351
(43) Date of publication of application: 20.12.2017
(73) Proprietor: AFT Trenchers Limited, Sudbury, Suffolk CO10 2YW (GB)
(72) Inventor: JURGENS, Harry Maria, Sudbury Suffolk CO10 2YW (GB)
(74) Representative: Sandersons
(86) International application number: PCT/GB2015/053756
(87) International publication number: WO 2016/128702

(56) References cited:
- DE-A1- 2 504 598
- US-A- 4 830 537
- US-A- 4 867 606
- US-A1- 2010 104 374
- US-B1- 6 299 381

## Description

The present invention relates to an apparatus for entrenching a flexible elongate member, such as a rope, cable or pipe, in the ground. The present invention also relates to a method of entrenching a flexible elongate member in the ground.

In order to improve ground drainage, it is known to provide narrow sand-filled trenches in the ground. These sand-filled trenches act as conduits for water, allowing the water to drain away from a saturated area of ground. It is also known to place water absorbing ropes in the ground. Water from the saturated area of ground can be absorbed through the rope and can drain away. It is also extremely well known to place cables or pipes in the ground, for example so as to provide utility services. However, it can be difficult and time-consuming to place ropes, cables or pipes in the ground without disturbing or "heaving" the surrounding ground, and the resultant uneven ground can be particularly undesirable at some sporting venues, such as a golf courses, football pitches, etc. An apparatus for entrenching a flexible elongate member is for example disclosed in DE 25 04 598 A1.

It is therefore a principal aim of this invention to provide an apparatus that can place a flexible elongate member in the ground without significantly disturbing the surrounding ground.

Thus, according to an aspect of the present invention there is provided an apparatus for entrenching a flexible elongate member in the ground, the apparatus comprising: a downwardly extending blade having a forward facing edge for parting the ground, the apparatus thereby forming a trench in the ground as the apparatus is moved forwards along the ground in use; an aggregate dispenser having an opening located rearwardly of the blade, the apparatus thereby filling the trench with aggregate as the apparatus is moved forwards along the ground in use; and a guide for guiding a flexible elongate member through the apparatus such that the member exits the apparatus rearwardly at or near a lower end of the blade, the apparatus thereby embedding the member in the aggregate in the trench as the apparatus is moved forwards along the ground in use.

As will be appreciated from the above, the present invention provides an apparatus that can place a flexible elongate member, such as a rope, cable or pipe, in the ground without significantly disturbing the surrounding ground. In particular, since the blade merely parts the ground, there is little ground disturbance or ground heave when forming the trench. Furthermore, since the trench can simultaneously be filled with consolidated aggregate, such as sand or soil, the ground remains substantially even once the member is entrenched in the ground. The aggregate can also provide a suitable medium for grass to regrow over the entrenched member.

In some embodiments, the elongate member comprises a drainage rope, such as a rope having a core for draining water. In other embodiments, the elongate member may comprise a cable. The cable may be for a utility supply (e.g. a telecommunications cable or electricity cable), for underground heating (e.g. a resistive electrical cable), or a perimeter cable (e.g. for a robotic lawnmower). In other embodiments, the elongate member may comprise a pipe, such as a water irrigation pipe. In some embodiments, more than one elongate member (or more than one type of elongate member) may simultaneously be entrenched by the apparatus in use.

In preferred embodiments, the horizontal cross-section of the blade is substantially V-shaped, with the base of the V-shape being at or towards the forward facing edge of the blade. The width of the blade, and therefore the width of the trench formed thereby, may be in the range 10-40mm (e.g. approximately 25mm). The working part of the blade, and therefore the depth of the trench formed thereby, may be in the range 100mm-400mm (e.g. approximately 250mm). The apparatus may further comprise means for oscillating the blade forwards and rearwards and/or upwards and downwards (e.g. in a substantially elliptical or circular motion) as the apparatus is moved forwards along the ground in use. These embodiments can assist in forming the trench, in consolidating/compacting the aggregate as it is deposited, and/or in reducing the amount of ground heave.

In preferred embodiments, the opening in the aggregate dispenser is adjacent the lower end and/or rearward side of the blade. Thus, the location at which the member and aggregate meet is preferably adjacent the lower end and/or rearward side of the blade. The member and the aggregate preferably remain separate up until that location.

In preferred embodiments, the guide comprises a blade conduit for guiding the member through the blade, the blade conduit being arranged such that the member exits the blade rearwardly at or near the lower end of the blade. These embodiments allow the member to be suitably entrenched without the need for the member to follow a tortuous route. However, in other embodiments, the guide may comprise a blade conduit for guiding the member along the outside of the blade.

In preferred embodiments, the apparatus further comprises a hopper for holding the aggregate, the hopper providing aggregate to the aggregate dispenser as the apparatus is moved forwards along the ground in use. The hopper is preferably located above the aggregate dispenser, preferably such that the aggregate can be provided to the aggregate dispenser under the force of gravity alone. The guide may further comprise an upper conduit for guiding the member downwardly from an upper part of the apparatus. The upper conduit preferably guides the member downwardly from above the hopper and/or preferably guides the member to the blade conduit.

In preferred embodiments, the apparatus further comprises a member dispenser for proving the member to the guide as the apparatus is moved forwards along the ground in use. The member dispenser may comprise, for example, a reel on which the member is wound or a container within which the member is suitably coiled. The member dispenser may be located in an upper part of the apparatus, preferably above the hopper if provided.

In preferred embodiments, the apparatus further comprises a coupling for attaching the apparatus to a vehicle such that the vehicle can move (e.g. pull) the apparatus forwards in use. The vehicle may be, for example, a tractor. In other embodiments, the apparatus may form an integral part of a vehicle.

In illustrative embodiments not part of the present invention, the apparatus further comprises one or more (e.g. two or more) wheels on which the apparatus can be moved forwards in use. The apparatus according to the invention comprises a roller for consolidating/compacting the aggregate in the trench as the apparatus is moved forwards along the ground in use. The roller also serves as a wheel on which the apparatus can be moved forwards in use.

According to another aspect of the present invention there is provided a method of entrenching a flexible elongate member in the ground using an apparatus as described herein, the method comprising moving the apparatus forwards such that the member is embedded in the aggregate in the trench as the apparatus is moved forwards along the ground.

By way of example only, embodiments of the invention will now be described in detail with reference being made to the accompanying drawings in which:
Figures 1 and 2 show an entrenching apparatus according to an embodiment of the present invention;
Figures 3 and 4 show further illustrative details not part of the present invention for the entrenching apparatus of Figures 1 and 2; and
Figures 5 and 6 show alternative further details for the entrenching apparatus of Figures 1 and 2.

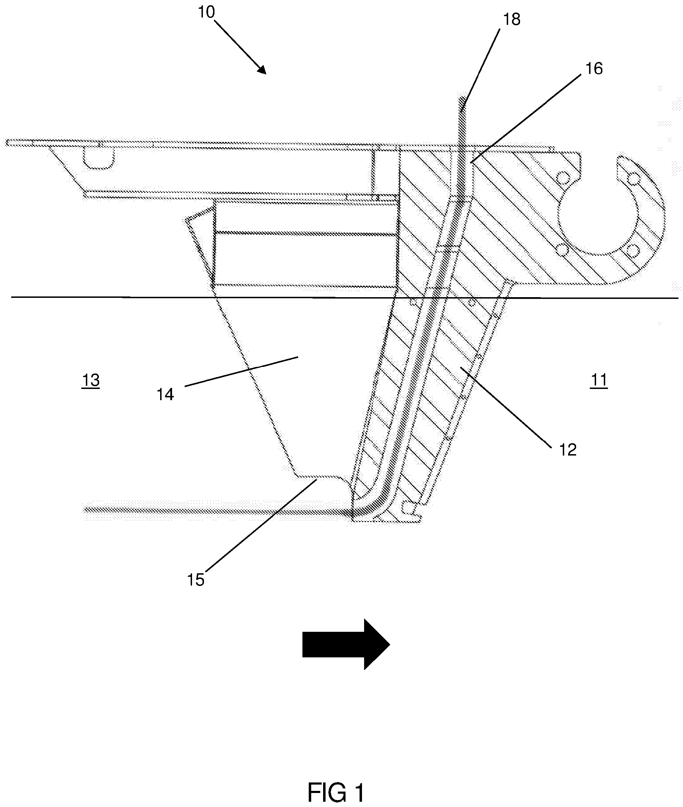

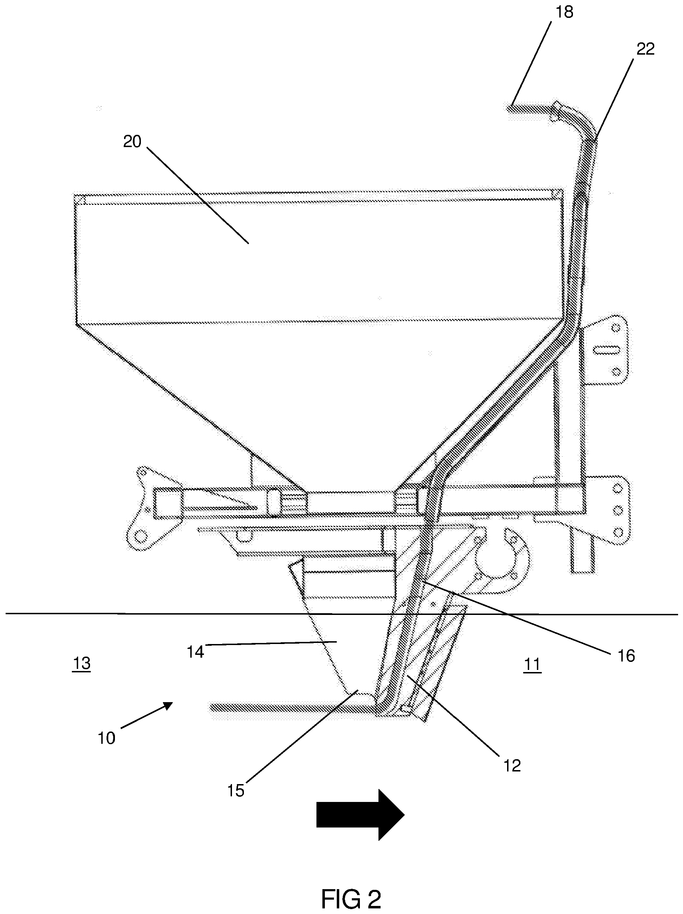

Reference will initially be made to Figures 1 and 2, which show an apparatus 10 for entrenching a flexible elongate member in the ground 11. In this embodiment, the member is a rope 18 having a water-draining core, although the following description could equally apply to other types of rope, cables or pipes.

As is shown in Figures 1 and 2, the apparatus 10 comprises a downwardly extending V-shaped blade 12 that has a forward facing edge for parting the ground 11 as the apparatus 10 is moved forwards (i.e. in the direction shown by the arrow). As the apparatus is moved forwards, the blade 12 oscillates forwards/rearwards and upwards/downwards so as to assist in parting the ground 11. In this embodiment, the blade 12 is 25mm wide and has a working depth of 250mm. The blade 12 therefore forms a trench 13 that is substantially 25mm wide and 250mm deep.

The apparatus 10 further comprises an aggregate dispenser 14 having an opening 15 located rearwardly of the blade 12. The aggregate dispenser 14 fills the trench 13 with aggregate as the apparatus 10 is moved forwards. The above-mentioned oscillation of the blade 12 can also assist in consolidating/compacting the aggregate as it is deposited. The aggregate dispenser 14 is provided with aggregate from a hopper 20 that is positioned above the aggregate dispenser 14. In this embodiment, the aggregate used is sand, although the description herein could equally apply to other types of aggregate.

The apparatus 10 further comprises a guide in the form of a blade conduit 16 that guides the rope 18 through the blade 12. The rope 18 exits the blade 10 rearwardly near a lower end of the blade 12 so as to occupy the length of trench 13. In this embodiment, the guide further comprises an upper conduit 22 for guiding the rope 18 from a reel (not shown) on the upper part of the apparatus 10 downwardly to the blade conduit 16.

Thus, as the apparatus 10 is moved forwards, the blade 12 forms a trench 13 in the ground 11, the rope 18 is fed into the trench 13, and the trench 13 is filled with aggregate thereby embedding the rope 18 in the aggregate in the trench 13.

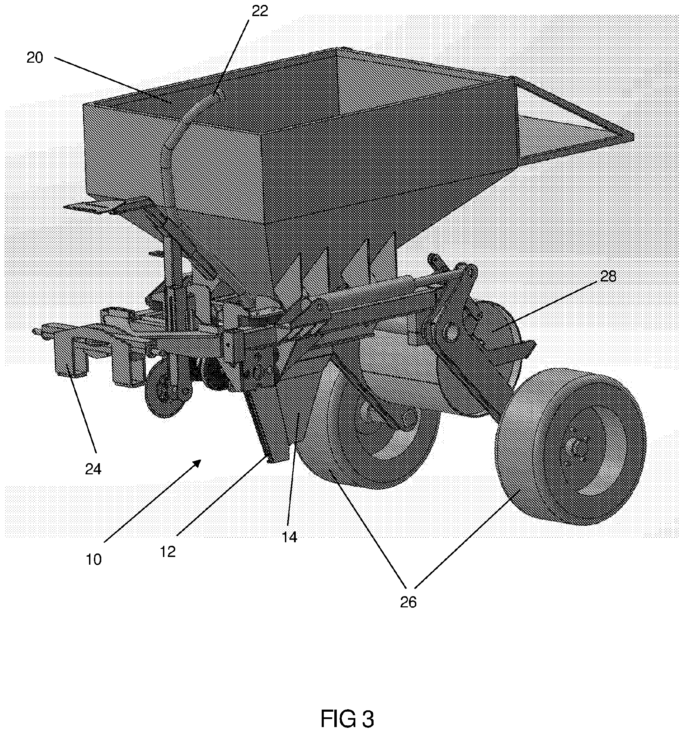

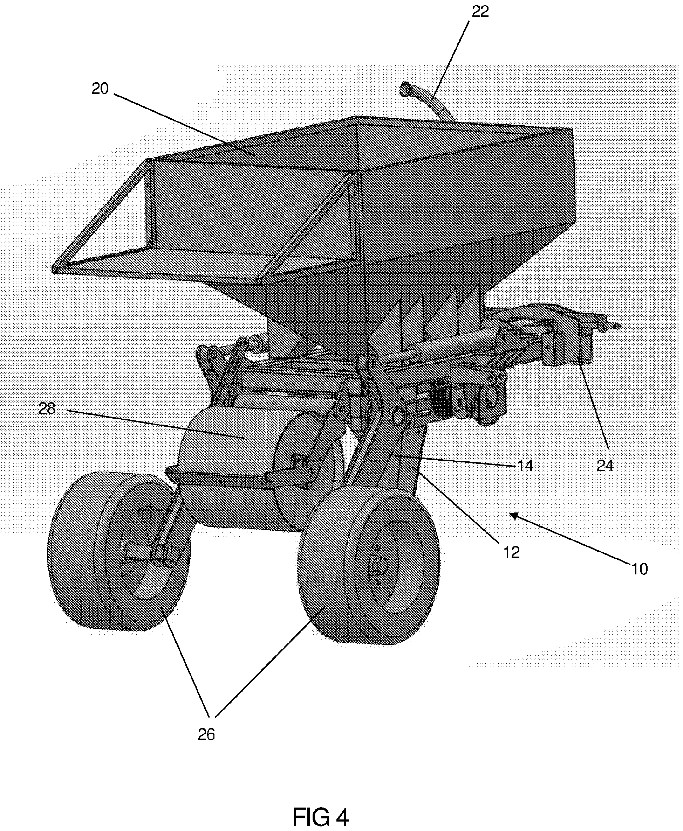

Referring now to Figures 3 and 4, the apparatus 10 may further comprise a coupling 24 for attaching the apparatus 10 to a vehicle, such as a tractor. This allows the vehicle to pull the apparatus 10 forwards. In the embodiment of Figures 3 and 4, the apparatus 10 further comprises two suspension-mounted wheels 26 on which the apparatus 10 can be pulled forwards. The apparatus 10 further comprises a roller 28 for consolidating/compacting the aggregate in the trench 13 as the apparatus 10 is moved forwards along the ground 11.

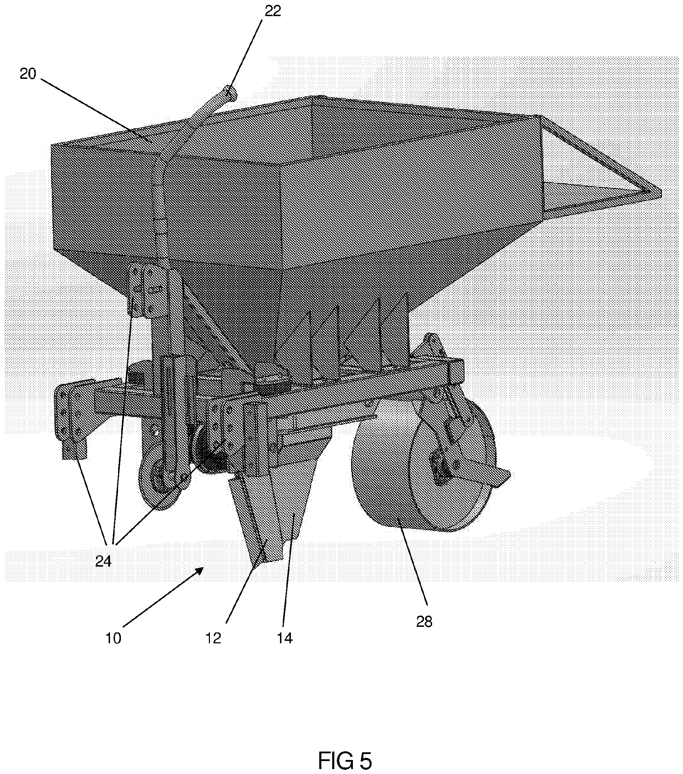

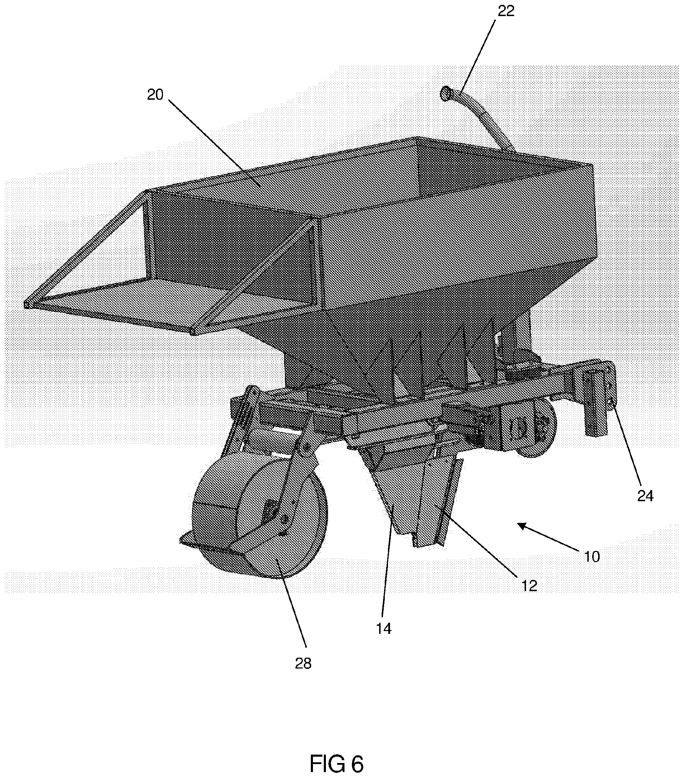

Referring now to Figures 5 and 6, the apparatus 10 may again comprise a coupling 24 for attaching the apparatus 10 to a vehicle. However, in the embodiment of Figures 5 and 6, the apparatus 10 comprises a consolidating/compacting roller 28 that also acts as a single wheel for the apparatus 10.

## Claims

1. An apparatus for entrenching a flexible elongate member in the ground, the apparatus comprising:
a downwardly extending blade having a forward facing edge for parting the ground, the apparatus thereby forming a trench in the ground as the apparatus is moved forwards along the ground in use;
an aggregate dispenser having an opening located rearwardly of the blade, the apparatus thereby filling the trench with aggregate as the apparatus is moved forwards along the ground in use;
a guide for guiding a flexible elongate member through the apparatus such that the member exits the apparatus rearwardly at or near a lower end of the blade, the apparatus thereby embedding the member in the aggregate in the trench as the apparatus is moved forwards along the ground in use; and
a roller for consolidating/compacting the aggregate in the trench as the apparatus is moved forwards along the ground in use;
**characterised in that** the roller also serves as a wheel on which the apparatus can be moved forwards in use.

2. An apparatus as claimed in claim 1, wherein the elongate member is a rope, cable or pipe.

3. An apparatus as claimed in claim 1 or 2, wherein the horizontal cross-section of the blade is substantially V-shaped, with the base of the V-shape being at or towards the forward facing edge of the blade.

4. An apparatus as claimed in any one of the preceding claims, further comprising means for oscillating the blade forwards and rearwards and/or upwards and downwards as the apparatus is moved forwards along the ground in use.

5. An apparatus as claimed in any one of the preceding claims, wherein the guide comprises a blade conduit for guiding the member through the blade, the blade conduit being arranged such that the member exits the blade rearwardly at or near the lower end of the blade.

6. An apparatus as claimed in any one of the preceding claims, further comprising a hopper for holding the aggregate, the hopper providing aggregate to the aggregate dispenser as the apparatus is moved forwards along the ground in use.

7. An apparatus as claimed in any one of the preceding claims, wherein the guide further comprises an upper conduit for guiding the member downwardly from an upper part of the apparatus.

8. An apparatus as claimed in any one of the preceding claims, further comprising a member dispenser for providing the member to the guide as the apparatus is moved forwards along the ground in use.

9. An apparatus as claimed in any one of the preceding claims, further comprising a coupling for attaching the apparatus to a vehicle such that the vehicle can move the apparatus forwards in use.

10. A method of entrenching a flexible elongate member in the ground using an apparatus as claimed in any preceding claim, the method comprising moving the apparatus forwards such that the member is embedded in the aggregate in the trench as the apparatus is moved forwards along the ground.

## Patentansprüche

1. Vorrichtung zum Eingraben eines flexiblen, langgestreckten Gegenstands im Boden, wobei die Vorrichtung aufweist:
eine sich nach unten erstreckende Schneide mit einer nach vorne weisenden Kante zum Teilen des Bodens, wodurch die Vorrichtung einen Graben im Boden bildet, wenn die Vorrichtung im Betrieb entlang des Bodens vorwärts bewegt wird,
eine Granulat-Ausgabeeinrichtung mit einer Öffnung, die hinter der Klinge liegt, wodurch die Vorrichtung den Graben mit Granulat füllt, während die Vorrichtung im Betrieb entlang des Bodens vorwärts bewegt wird,
eine Führung zum Führen eines flexiblen, langgestreckten Gegenstands durch die Vorrichtung, so dass der Gegenstand aus der Vorrichtung hinter der Klinge oder nahe einem unteren Ende der Klinge austritt, wodurch die Vorrichtung den Gegenstand im Granulat im Graben einbettet, während die Vorrichtung im Betrieb entlang des Bodens vorwärts bewegt wird, und
eine Walze zum Festigen/Verdichten des Granulats im Graben, während die Vorrichtung im Betrieb entlang des Bodens vorwärts bewegt wird,
**dadurch gekennzeichnet, dass** die Walze auch als Rad dient, auf dem die Vorrichtung im Betrieb vorwärts bewegt werden kann.

2. Vorrichtung wie in Anspruch 1 beansprucht, wobei der langgestreckte Gegenstand ein Seil, ein Kabel oder eine Röhre ist.

3. Vorrichtung wie in Anspruch 1 oder 2 beansprucht, wobei der horizontale Querschnitt der Scheide im Wesentlichen V-förmig ist, wobei die Basis der V-Form an der oder gerichtet auf die nach vorne weisende Kante der Schneide ist.

4. Vorrichtung wie in einem der vorhergehenden Ansprüche beansprucht, die weiter eine Einrichtung aufweist, um die Schneide vorwärts und rückwärts und/oder nach oben und nach unten oszillieren zu lassen, während die Vorrichtung im Betrieb entlang des Bodens bewegt wird.

5. Vorrichtung wie in einem der vorhergehenden Ansprüche beansprucht, wobei die Führung eine Schneidenleitung zum Führen des Gegenstands durch die Schneide aufweist, wobei die Schneidenleitung so ausgestaltet ist, dass der Gegenstand hinter oder nahe dem unteren Ende der Schneide aus der Schneide austritt.

6. Vorrichtung wie in einem der vorhergehenden Ansprüche beansprucht, die weiter einen Trichter zum Bereithalten des Granulats aufweist, wobei der Trichter der Granulat-Ausgabeeinrichtung Granulat zuführt, während die Vorrichtung im Betrieb entlang des Bodens bewegt wird.

7. Vorrichtung wie in einem der vorhergehenden Ansprüche beansprucht, wobei die Führung eine obere Führung zum Führen des Gegenstands aus einem oberen Teil der Vorrichtung nach unten aufweist.

8. Vorrichtung wie in einem der vorhergehenden Ansprüche beansprucht, die weiter eine Ausgabeeinrichtung für den Gegenstand zum Liefern des Gegenstands zu der Führung aufweist, während die Vorrichtung im Betrieb entlang des Bodens vorwärts bewegt wird.

9. Vorrichtung wie in einem der vorhergehenden Ansprüche beansprucht, die weiter eine Kupplung zum Befestigen der Vorrichtung an einem Fahrzeug aufweist, so dass das Fahrzeug die Vorrichtung im Betrieb bewegen kann.

10. Verfahren zum Eingraben eines flexiblen, langgestreckten Gegenstands im Boden unter Verwendung einer Vorrichtung wie in einem der vorhergehenden Ansprüche beansprucht, wobei das Verfahren beinhaltet, die Vorrichtung vorwärts zu bewegen, so dass der Gegenstand im Granulat im Graben eingebettet wird, während die Vorrichtung entlang des Bodens vorwärts bewegt wird.

## Revendications

1. Appareil pour l'enfouissement d'un élément allongé flexible dans le sol, l'appareil comprenant :
une lame s'étendant vers le bas ayant un bord orienté vers l'avant pour séparer le sol, l'appareil formant ainsi une tranchée dans le sol lorsque l'appareil est déplacé vers l'avant le long du sol en cours d'utilisation ;
un distributeur d'agrégat ayant une ouverture située à l'arrière de la lame, l'appareil remplissant ainsi la tranchée d'agrégat lorsque l'appareil est déplacé vers l'avant le long du sol en cours d'utilisation ;
un guide pour guider un élément allongé flexible à travers l'appareil de telle sorte que l'élément quitte l'appareil vers l'arrière au niveau ou à proximité d'une extrémité inférieure de la lame, l'appareil insérant ainsi l'élément dans l'agrégat dans la tranchée lorsque l'appareil est déplacé vers l'avant le long du sol en cours d'utilisation ; et
un rouleau pour consolider /compacter l'agrégat dans la tranchée lorsque l'appareil est déplacé vers l'avant le long du sol en cours d'utilisation ;
**caractérisé en ce que**
le rouleau sert également de roue sur laquelle l'appareil peut être déplacé vers l'avant en cours d'utilisation.

2. Appareil selon la revendication 1, dans lequel l'élément allongé est une corde, un câble ou un tuyau.

3. Appareil selon la revendication 1 ou 2, dans lequel la section transversale horizontale de la lame est sensiblement en forme de V, la base de la forme en V étant au niveau ou vers le bord de la lame orienté vers l'avant.

4. Appareil selon l'une quelconque des revendications précédentes, comprenant en outre un moyen pour faire osciller la lame vers l'avant et vers l'arrière et/ou vers le haut et vers le bas lorsque l'appareil est déplacé vers l'avant le long du sol en cours d'utilisation.

5. Appareil selon l'une quelconque des revendications précédentes, dans lequel le guide comprend un conduit de lame pour guider l'élément à travers la lame, le conduit de lame étant agencé de sorte que l'élément quitte la lame vers l'arrière au niveau ou à proximité de l'extrémité inférieure de la lame.

6. Appareil selon l'une quelconque des revendications précédentes, comprenant en outre une trémie pour contenir l'agrégat, la trémie fournissant de l'agrégat au distributeur d'agrégat lorsque l'appareil est déplacé vers l'avant le long du sol en cours d'utilisation.

7. Appareil selon l'une quelconque des revendications précédentes, dans lequel le guide comprend en outre un conduit supérieur pour guider l'élément vers le bas depuis une partie supérieure de l'appareil.

8. Appareil selon l'une quelconque des revendications précédentes, comprenant en outre un distributeur d'élément pour fournir l'élément au guide lorsque l'appareil est déplacé vers l'avant le long du sol en cours d'utilisation.

9. Appareil selon l'une quelconque des revendications précédentes, comprenant en outre un accouplement pour attacher l'appareil à un véhicule de telle sorte que le véhicule puisse déplacer l'appareil vers l'avant lors de l'utilisation.

10. Procédé d'enfouissement d'un élément allongé flexible dans le sol au moyen d'un appareil selon l'une quelconque des revendications précédentes, le procédé comprenant un déplacement de l'appareil vers l'avant de sorte que l'élément soit insérer dans l'agrégat dans la tranchée lorsque l'appareil est déplacé vers l'avant le long du sol.
